# EUROPÄISCHE PATENTSCHRIFT

(11) **EP 3 788 841 B1**
(45) Veröffentlichungstag und Bekanntmachung des Hinweises auf die Patenterteilung: **03.08.2022**
(21) Anmeldenummer: 19734074.8
(22) Anmeldetag: 26.06.2019
(51) Int. Cl.: H05B 47/11, H05B 47/115

(54) **ANWESENHEITSSENSOR UND BELEUCHTUNGSSYSTEM MIT EINEM SOLCHEN ANWESENHEITSSENSOR**
PRESENCE SENSOR AND LIGHTING SYSTEM COMPRISING SUCH A PRESENCE SENSOR
DÉTECTEUR DE PRÉSENCE ET SYSTÈME D'ÉCLAIRAGE DOTÉ D'UN DÉTECTEUR DE PRÉSENCE

(30) Priorität: 28.06.2018 DE 102018115569
(43) Veröffentlichungstag der Anmeldung: 10.03.2021
(73) Patentinhaber: Tridonic GmbH & Co. KG, 6851 Dornbirn (AT)
(72) Erfinder: KISTLER, Roger, 8755 Ennenda (CH)
(74) Vertreter: Beder, Jens
(86) Internationale Anmeldenummer: PCT/EP2019/067095
(87) Internationale Veröffentlichungsnummer: WO 2020/002481

(56) Entgegenhaltungen:
- WO-A1-2010/071913
- DE-U1- 29 817 816
- DE-U1-202014 106 174

## Beschreibung

Die Erfindung betrifft einen Anwesenheitssensor sowie ein Beleuchtungssystem mit einem solchen Anwesenheitssensor, wobei der Anwesenheitssensor in der Lage ist, nicht nur ein Signal bei Erkennen einer Person in einem Erfassungsbereich auszugeben, sondern auch unabhängig von der Erkennung einer Person im Erfassungsbereich ein solches Signal auszugeben, sodass ein Einschalten eines Beleuchtungssystems auch auf Basis einer Tasterbetätigung eines Nutzers möglich ist. Die Erfindung betrifft auch ein Verfahren zur Ausgabe einer Versorgungsspannung an einer Schnittstelle eines Anwesenheitssensors.

Für Beleuchtungssysteme ist es generell bekannt, dass zur Beleuchtung von lediglich vorübergehend genutzten Bereichen Zeitschaltungen verwendet werden. So kann zum Beispiel in einem Treppenhaus ein Nutzer mittels eines Tasters einen kurzen Spannungsimpuls geben, woraufhin das Licht im gesamten Treppenhaus eingeschaltet wird. Nach Ablauf einer bestimmten Zeitdauer wird das Licht dann automatisch wieder ausgeschaltet. Solche Schaltungen sind bereits seit Jahrzehnten bekannt und dienen dazu, den Energieverbrauch zu senken, indem ein unnötiges Leuchten zumindest zeitlich begrenzt wird. Es kann damit nicht vergessen werden, dass Licht auszuschalten, wenn es nicht mehr benötigt wird. Allerdings haben solche Schaltungen den Nachteil, dass das Licht auch dann wieder ausgeschaltet wird, wenn es der Nutzer länger benötigen würde. Ein Beispiel könnte sein, dass die im Mittel benötigte Dauer, zum Beispiel um eine Treppe zu gehen, für eine bestimmte Person nicht ausreicht. Diese Person müsste dann erneut den Taster betätigen, um das Licht wieder einzuschalten. In der Praxis bedeutet dies jedoch eine erhebliche Komfortminderung. Alternativ kann die Leuchtdauer generell verlängert werden, wodurch aber bei Nutzern, welche die durchschnittliche Verweilzeit haben, unnötig Energie verbraucht wird.

Eine Möglichkeit dem entgegenzutreten ist es, wenn anstelle einer solchen einfach zeitgesteuerten Treppenlichtschaltung Bewegungsmelder bzw. Anwesenheitssensoren eingesetzt werden. Wird hiermit der gesamte zu beleuchtende Bereich abgedeckt, so wird tatsächlich das Licht in dem Moment eingeschaltet, wo es benötigt wird und bleibt so lange eingeschaltet, bis die entsprechende Person den Erfassungsbereich, in dem eingangs genannten Beispiel also das Treppenhaus, verlassen hat. In einem solchen Fall ist allerdings problematisch, dass tatsächlich der gesamte von der Person benutzte Bereich durch den Erfassungsbereich eines oder mehrerer Anwesenheitssensoren abgedeckt sein muss.

Die WO 2010/071913 offenbart ein Verfahren zum Ansteuern von Betriebsgeräten eines Beleuchtungssystems. Das Beleuchtungssystem umfasst wenigstens zwei verschiedenen Leuchtmittel und ein Betriebsgerät zum Betreiben der Leuchtmittel, wobei das Betriebsgerät zumindest eine Schnittstelle aufweist. Abhängig von einem über die Schnittstelle zugeführten Signal werden die Leuchtmittel voneinander unterschiedlich angesteuert. Bei dem, dem Betriebsgerät über die Schnittstelle, zugeführten Signal kann es sich um ein Signal eines Bewegungsmelders oder eines Relais handeln

Aus der DE 10 2005 008 996 A1 ist außerdem, ein System bekannt, bei dem ein Anwesenheitssensor mit einem Steuereingang eines Betriebsgeräts verbunden ist. Im Gegensatz zu sonst üblichen Anordnungen, bei dem die Stromversorgung für das Leuchtmittel mittels des Anwesenheitssensors geschaltet wird, wird nunmehr das Betriebsgerät angesteuert, das einem Steuereingang aufweist, dem ein durch Durchschleifen der Phase des Stromnetzes erzeugtes Steuersignal zugeführt wird. Wie bei anderen Schaltungen, die einen oder mehrere Anwesenheitssensoren verwenden, ist allerdings der Nachteil, dass wie oben bereits beschrieben wurde, der gesamte Bereich, der zu Beleuchtung vorgesehen ist, über die Erfassungsbereiche des einen oder der mehreren Anwesenheitssensoren abgedeckt werden muss. Bei ungünstiger Geometrie eines Treppenhauses oder anderen zu beleuchtenden Bereichs kann es daher auch vorkommen, dass ein zusätzlicher Sensor verwendet werden muss. Daher wäre es wünschenswert, wenn ein grundsätzlich mittels Anwesenheitssensor gesteuertes Beleuchtungssystem auch auf Basis einer Nutzereingabe, wie beispielsweise einer Tasterbetätigung, eingeschaltet werden könnte. Dann nämlich kann eine Person, die den zu beleuchtenden Bereich betritt, mittels eines Tasters die Beleuchtung einschalten, auch wenn der gerade betretene Bereich nicht durch den Erfassungsbereich des/der Anwesenheitssensors/en abgedeckt ist.

Aufgabe der Erfindung ist es daher, einen Anwesenheitssensor sowie ein mit diesem Anwesenheitssensor gebildetes Beleuchtungssystem zu schaffen, bei dem eine bedarfsgerechte Leuchtdauer sichergestellt ist, und welches als Reaktion auf eine Benutzereingabe eingeschaltet wird.

Die Aufgabe wird durch den erfindungsgemäßen Anwesenheitssensor sowie das erfindungsgemäße Beleuchtungssystem entsprechend der unabhängigen Ansprüche gelöst. Die Unteransprüche betreffen vorteilhafte Weiterbildungen des Anwesenheitssensors sowie des Beleuchtungssystems.

Erfindungsgemäß weist der Anwesenheitssensor eine Schnittstelle zur Steuersignalausgabe auf, über die eine Versorgungsspannung des Anwesenheitssensors ausgegeben werden kann. Weiter umfasst der Anwesenheitssensor eine Versorgungsspannungsschnittstelle, eine Steuereinheit und eine Schaltvorrichtung. Dem Anwesenheitssensor wird über die Versorgungsspannungsschnittstelle elektrische Energie zugeführt und die Schaltvorrichtung des Anwesenheitssensors ist mit der Steuereinheit derart verbunden , dass auf Basis eines von der Steuereinheit ausgegebenen Signals die Schaltvorrichtung geöffnet oder geschlossen werden kann. Bei geschlossener Schaltvorrichtung ist die Versorgungsspannungsschnittstelle mit der Schnittstelle des Anwesenheitssensors verbunden. Eine Spannung, die an der Versorgungsspannungsschnittstelle anliegt, wird damit an der Schnittstelle als Steuersignal ausgegeben und kann zum Einschalten des Beleuchtungssystems genutzt werden. Zudem ist die Steuereinheit des Anwesenheitssensors so eingerichtet, dass sie bei Erkennen einer Person in einem Erfassungsbereich des Anwesenheitssensors die Schaltvorrichtung schließt und damit ebenfalls ein Signal an der Schnittstelle bereitstellt. Gemäß der Erfindung ist nun die Steuereinheit so eingerichtet, dass sie erkennt, wenn an der Schnittstelle ein Spannungsanstieg auf die Versorgungsspannung auftritt. In diesem Fall wird nun durch die Steuereinheit die Schaltvorrichtung in ihre geschlossene Stellung gebracht und in der geschlossenen Stellung für eine Mindestdauer gehalten. Damit ist es möglich, dem Anwesenheitssensor an seiner eigentlichen Ausgangsseite einen Spannungsimpuls zuzuführen, der den Anwesenheitssensor veranlasst, für eine Mindestdauer die Schaltvorrichtung geschlossen zu halten, auch wenn sich gerade keine Person im Erfassungsbereich des Anwesenheitssensors befindet.

Dieser Spannungsimpuls kann damit einfach mittels eines Tasters (Schließer) zugeführt werden, wobei der Taster in seinem Ruhezustand die Phase eines Stromversorgungsnetzes von der Schnittstelle des Anwesenheitssensors trennt und bei Betätigung verbindet. Im Zusammenwirken mit dem Anwesenheitssensor wie oben beschrieben wird damit trotz des lediglich kurzen Impulses, den die Tasterbetätigung erzeugt, das Licht für eine Mindestdauer eingeschaltet. Entsprechend dem erfindungsgemäßen Beleuchtungssystem ist die Schnittstelle des Anwesenheitssensors mit einem Steuereingang einer Ansteuerschaltung verbunden, wobei die Ansteuerschaltung letztlich ein Leuchtmittel mit elektrischer Energie versorgt. Typischerweise ist das Leuchtmittel eine LED oder eine Kombination von mehreren LEDs und die Ansteuerschaltung ein Konverter. Andere Leuchtmittel sind allerdings grundsätzlich bei Verwendung einer entsprechend geeigneten Ansteuerschaltung denkbar.

Dadurch, dass der erfindungsgemäße Anwesenheitssensor erkennt, wenn bei ausgeschalteten Beleuchtungssystem, also einer spannungsfreien Schnittstelle des Anwesenheitssensors, an dieser Schnittstelle ein Spannungsanstieg auf die Versorgungsspannung erfolgt, ist im Ergebnis diese Schnittstelle bidirektional ausgebildet. Sie fungiert einerseits als Ausgangsschnittstelle zum Ausgeben eines Steuersignals für den nachfolgenden Konverter, wenn durch den Anwesenheitssensor selbst im Erfassungsbereich des Anwesenheitssensors eine Person detektiert wird. Andererseits kann sie auch ohne das Erfassen einer Person im Erfassungsbereich bei Erkennen eines Spannungsanstiegs dieses an der Ausgangsseite des Anwesenheitssensors vorhandene Signal verlängern, sodass zumindest für eine Mindestdauer dort das Steuersignal ausgegeben wird. Dies ist insbesondere deswegen vorteilhaft, weil damit der kurze Impuls eines Tasters genügt, um die Beleuchtung für eine gewisse Zeit einzuschalten. Die Verwendung eines solchen kurzen Impulses ermöglicht aber den Aufbau eines besonders einfachen Systems, welches von mehreren Stellen aus eingeschaltet werden kann.

Die Versorgungsspannung ist dabei insbesondere die Netzspannung eines öffentlichen Stromversorgungsnetzes bzw. des Stromversorgungsnetzes des Gebäudes. Damit entsteht zwischen dem Durchschalten der Versorgungsspannung durch das Schließen der Schaltvorrichtung des Anwesenheitssensors und dem Beaufschlagen der Schnittstelle des Anwesenheitssensors kein Kurzschluss, da beide Spannungen die identische Spannung des öffentlichen Stromversorgungsnetzes sind.

Gemäß einer vorteilhaften Weiterbildung des erfindungsgemäßen Anwesenheitssensors und des entsprechenden Beleuchtungssystems, ist die Steuereinheit des Anwesenheitssensors so eingerichtet, dass sie, wenn ihre Schaltvorrichtung geschlossen ist und in den Erfassungsbereich des Anwesenheitssensors während der Mindestdauer eine Person eintritt, die Schaltvorrichtung geschlossen hält und selbst nach dem Wegfall des Erfassungssignals, welches angibt, dass eine Person im Erfassungsbereich erkannt wird, die Schaltvorrichtung für die Mindestdauer geschlossen hält. Eine solche Einrichtung der Steuereinheit deckt den Fall ab, dass zunächst, zum Beispiel mit Hilfe der Betätigung eines Tasters, die Beleuchtung eingeschaltet wird und eingeschaltet bleibt, wenn während der ausgelösten Mindestdauer für das Steuersignal eine Person in den Erfassungsbereich des Anwesenheitssensors tritt und selbst nach dem Verlassen des Erfassungsbereichs das Licht für die Mindestdauer weiterhin eingeschaltet bleibt.

Gemäß einer weiteren vorteilhaften Ausführungsform kann die Steuereinheit des Anwesenheitssensors so eingerichtet sein, dass sie auch ohne das Erkennen eines Spannungsanstiegs bei Vorliegen eines Erfassungssignals, das die Anwesenheit einer Person angibt, die Schaltvorrichtung automatisch schließt. Dies kann insbesondere dann vorteilhaft sein, wenn ein zu beleuchtender Bereich auch an einer Stelle betreten werden kann, die zwar durch den Erfassungsbereich eines Anwesenheitssensors abgedeckt ist, die jedoch keinen Taster zum manuellen Einschalten des Beleuchtungssystems aufweist.

Besonders bevorzugt ist es, wenn in einem LED Modul ein oder mehrere Leuchtmittel gemeinsam mit einem Konverter bzw. der dem oder den LED-Leuchtmittel(n) zugeordneten Ansteuerschaltung und der erfindungsgemäße Anwesenheitssensor auf einer gemeinsamen Leiterplatte angeordnet sind. Eine solche Integration ermöglicht es, zum Beispiel in mehreren unterschiedlichen Leuchten, die aber gemeinsam zu schalten sind, jeweils eine Anwesenheitssensor integrieren. Dabei kann auch die Situation auftreten, dass verschiedene Leuchten verschiedene Aufgaben erfüllen sollen. Zum Beispiel, wie oben bereits erwähnt, kann ein Teil der Leuchten so angeordnet sein, dass der in ihnen integrierte Anwesenheitssensor eine Stelle, an der eine Person den beleuchteten Raum betreten kann, abdeckt. In einem solchen Fall scheint es nicht sinnvoll, eine Person zu zwingen, zunächst einen Taster zu betätigen und das Licht einzuschalten. Andererseits kann eine weitere Leuchte desselben Beleuchtungssystems so angeordnet sein, dass eine sich nähernde Person nicht unmittelbar in den Erfassungsbereich des Anwesenheitssensors gelangt. In diesem Fall könnte ein Taster vorgesehen sein, durch den noch vor Eintritt in den Erfassungsbereich die Person das Licht einschalten kann. Da grundsätzlich die Anwesenheitssensoren so eingerichtet sind, dass sie einen Spannungsanstieg an ihrer ausgangsseitig ausgebildeten Schnittstelle erkennen, werden in dem Beleuchtungssystem sämtliche Schnittstellen der Anwesenheitssensoren miteinander verbunden. Damit spielt es keine Rolle, auf welche Weise das Beleuchtungssystem insgesamt eingeschaltet wurde. Das Licht bleibt in jedem Fall so lange eingeschaltet, bis keine Person mehr in irgendeinem der Erfassungsbereiche durch die Anwesenheitssensoren erkannt werden kann und erlischt erst nach dem weiteren Verstreichen der Mindestdauer.

In dem erfindungsgemäßen Beleuchtungssystem kann vorteilhaft vorgesehen sein, nicht nur solche LED Module miteinander zu kombinieren, welche jeweils einen Anwesenheitssensor aufweisen, sondern auch solche LED Module, welche keinen eigenen Anwesenheitssensor besitzen. In diesem Fall wird eine Steuerleitung, welche mit den Schnittstellen der vorhandenen Anwesenheitssensoren verbunden ist, auch mit einem Steuereingang eines LED Moduls verbunden, dem in dem LED Modul kein Anwesenheitssensor zugeordnet ist. Ein solches LED Modul ist damit "passiv" und wird automatisch eingeschaltet, wenn durch eines der Module mit Anwesenheitssensor aufgrund der Erkennung einer Person aber auch als Reaktion auf eine Betätigung des Tasters die Steuerleitung mit der Versorgungsspannung beaufschlagt.

Der Anwesenheitssensor ist vorzugsweise konfigurierbar, sodass durch einen Nutzer eingestellt werden kann, ob ein automatisches Einschalten des Lichts bei Erkennen einer Person im Erfassungsbereich erfolgen soll, oder ob das Beleuchtungssystem ausschließlich nach einer Tasterbetätigung in Betrieb genommen werden soll. In diesem Fall wäre der Anwesenheitssensor so konfiguriert, dass durch die Steuereinheit bei Vorliegen eines Erfassungssignals die Schaltvorrichtung nur dann geschlossen gehalten wird, wenn zuvor ein an der Schnittstelle anliegender Spannungsanstieg erkannt wurde. Tritt dagegen ohne das Vorliegen eines solchen Spannungsanstiegs an der Schnittstelle eine Person in den Erfassungsbereich des Anwesenheitssensors, so wird zwar ein Erfassungssignal in dem Anwesenheitssensor erzeugt, die Steuereinheit schaltet dann aber trotzdem die Schaltvorrichtung nicht leitend. Weiter kann als zusätzliche Funktion die vollständige Unterdrückung des Erfassungssignals bei dem Anwesenheitssensor eingestellt werden. Damit wird insgesamt für die Funktion des Beleuchtungssystems erreicht, dass eine normale, zeitgesteuerte Treppenlichtschaltung realisiert ist. Bei Vorliegen eines Spannungsanstiegs an der Schnittstelle des Anwesenheitssensors, wie er eben durch Betätigung des Tasters erzeugt wird, bleibt für die Mindestdauer dennoch das Licht eingeschaltet. Zu beachten ist, dass erfindungsgemäß in einem Beleuchtungssystem insbesondere unterschiedlich konfigurierte Anwesenheitssensoren miteinander kombiniert werden können. Durch das Verbinden der Schnittstellen der unterschiedlichen Anwesenheitssensoren mit einer gemeinsamen Steuerleitung wird dennoch jedes der in das System integrierten Leuchtmittel gemeinsam ein - bzw. ausgeschaltet.

Die Steuereinheit kann weiterhin mit einem Helligkeitssensor verbunden sein, und die Ausgabe der Versorgungsspannung über die Schnittstelle kann abhängig von dem Helligkeitssensor erfolgen.

Die Erfindung betrifft auch ein Verfahren zur Ausgabe einer Versorgungsspannung an einer Schnittstelle eines Anwesenheitssensors, wobei dem Anwesenheitssensor über eine Versorgungsspannungsschnittstelle elektrische Energie zuführbar ist und der Anwesenheitssensor die Versorgungsspannungsschnittstelle mit der Schnittstelle zur Ausgabe der Versorgungsspannung verbindet, wenn auf Basis eines Erfassungssignals eine Anwesenheit einer Person erkennt wird, wobei ein Anstieg einer an der Schnittstelle anliegenden Spannung auf die Versorgungsspannung erkannt wird und bei einem erkannten Anstieg die Versorgungspannungsschnittstelle mit der Schnittstelle für eine Mindestzeitdauer tMin verbunden wird.

Details und Aspekte der vorliegenden Erfindung werden nachfolgend unter Bezugnahme auf die beigefügten Zeichnungen erläutert. Es zeigen:
- Figur 1: ein Blockschaltbild eines erfindungsgemäßen Beleuchtungssystems unter Verwendung des erfindungsgemäßen Anwesenheitssensors; und
- Figur 2: ein zeitlicher Verlauf einer Lichtsteuerung anhand des Beispiels einer Betätigung des Tasters zum Einschalten des Lichts.

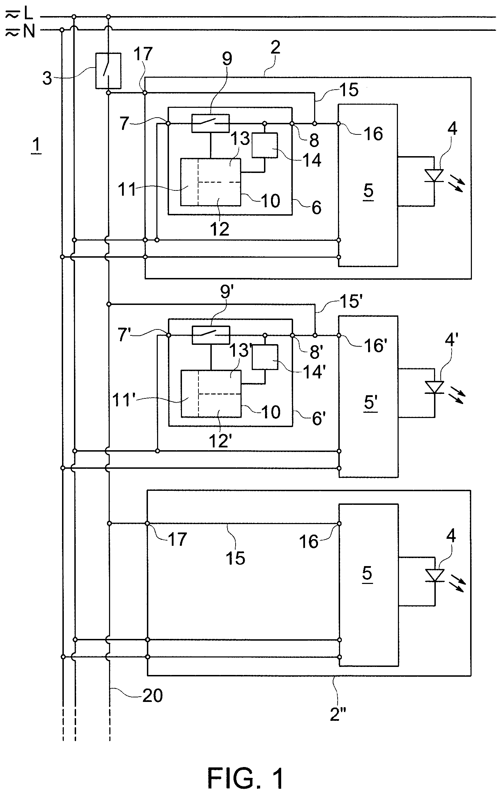

Ein Beispiel für ein erfindungsgemäß Beleuchtungssystem 1 ist in der Figur 1 dargestellt. Das Beleuchtungssystem 1 wird über ein öffentliches Stromversorgungsnetz mit Strom und Spannung versorgt, wie es in der Figur 1 mit den Bezeichnungen L und N angegeben ist. Die beiden Leitungen L und N der Stromversorgung versorgen das erfindungsgemäße LED Modul 2 mit einer Versorgungsspannung, typischerweise 230 oder 110 V. Das LED Modul 2 enthält wenigstens eine LED 4 als Leuchtmittel, die von einer Ansteuerschaltung 5, welche in an sich bekannter Weise auf Basis der öffentlichen oder gebäudeseitigen Stromversorgung Strom und Spannung für die LED 4 als Leuchtmittel bereitstellt, mit elektrischer Leistung versorgt wird.

Die Ansteuerschaltung 5 weist neben Anschlüssen zu direkten Zuführung von elektrischer Energie auch einen Steuereingang 16 auf. Dem Steuereingang 16 ist ein Steuersignal zu fühlbar, wobei als Steuersignal die Spannung der Phase L des Stromversorgungsnetzes zugeführt wird. Über eine Verbindungsleitung 15 ist der Steuereingang 16 hierzu mit einer Steuerleitung 20 verbunden, die das Steuersignal führt. Die Steuerleitung 20 verläuft außerhalb des LED Moduls 2 und ist mit der Verbindungsleitung 15 über eine Steuerleitungsschnittstelle 17 verbunden. Damit kann über die Steuerleitung 20 der Anschluss einer beliebigen Anzahl von LED-Modulen wie dem LED Modul 2 oder anderen LED-Modulen, wie es nachfolgend noch erläutert wird, erfolgen.

Die Steuerleitung 20 ist ferner über einen Taster 3 mit der Phase L des Stromversorgungsnetzes verbunden. Damit kann, bei Schließen des Tasters 3 aufgrund einer Betätigung durch eine Person, die Steuerleitung 20 auf das Spannungsniveau der Phase L des Stromversorgungsnetzes gebracht werden. Diese Spannung liegt dann auch an einer Schnittstelle 8 eines Anwesenheitssensors 6 an, der ebenfalls in dem LED Modul 2 auf einer Leiterplatte gemeinsam mit Ansteuerschaltung 5 und LED 4 angeordnet ist. Die Schnittstelle 8, an der auch ein Steuersignal, dass durch den Anwesenheitssensor 6 erzeugt wird, ausgegeben wird, ist direkt leitend mit dem Steuereingang 16 der Ansteuerschaltung 5 verbunden. Damit liegt an der Schnittstelle 8 stets dieselbe Spannung an, die auf der Steuerleitung 20 geführt wird. Wird umgekehrt durch den Anwesenheitssensor 6 ein Steuersignal an seiner Schnittstelle 8 ausgegeben, so liegt diese Spannung ebenfalls auf der Steuerleitung 20. Damit kann die Steuerleitung 20 nicht nur durch den Taster 3 mit einer Spannung beaufschlagt werden, sondern auch durch den Anwesenheitssensor 6 in nachfolgend noch zu beschreibender Weise.

Der Anwesenheitssensor 6 weist hierzu eine Schaltvorrichtung 9 auf, die über einen Eingangsanschluss (Versorgungsspannungsschnittstelle) 7 mit der Phase L der Stromversorgung verbunden ist. Bei geschlossener Schaltvorrichtung 9 wird damit der Schnittstelle 8 die an der Versorgungsspannungsschnittstelle 7 zur Verfügung gestellte Spannung zugeführt. Damit kann als Steuersignal an der Schnittstelle 8 die Spannung der Phase L des Versorgungsnetzes ausgegeben werden. Das Öffnen und Schließen der Schaltvorrichtung 9 wird durch eine Steuereinheit 10 gesteuert. Die Steuereinheit 10 weist einen Präsenzsensor 11 auf, der in an sich bekannter Weise ein Erfassungssignal erzeugt, wenn eine Person in einem Erfassungsbereich des Anwesenheitssensors 6 erkannt wird. Dieses Erfassungssignal wird an einen Microcontroller 13 der Steuereinheit 10 weitergeleitet, die ihrerseits die Schaltvorrichtung 9 so ansteuert, dass eine leitende Verbindung zwischen der Versorgungsspannungsschnittstelle 7 und der Schnittstelle 8 hergestellt wird. Die Steuereinheit 10 weist weiterhin einen Speicher 12 auf, indem verschiedene Parameter abgelegt sein können. Solche Parameter können beispielsweise eine Mindestdauer sein, für die die Schaltvorrichtung 9 nach dem Schließen geschlossen bleibt. Wird also durch die Präsenzsensor 11 kein Erfassungssignal mehr ausgegeben, d. h. in dem Erfassungsbereich des Anwesenheitssensors 6 wird keine Person mehr erkannt, so hält die Steuereinheit 10 die Schaltvorrichtung 9 weiterhin geschlossen, bis die Mindestdauer, welche in dem Speicher 12 abgelegt ist, verstrichen ist.

Erfindungsgemäß wird aber nun die Schaltvorrichtung 9 nicht nur dann geschlossen, wenn durch die Präsenzsensor 11 ein Erfassungssignal erzeugt wird, sondern auch, wenn durch den Taster 3 ein Anstieg der Spannung auf der Versorgungsleitung 20 erfolgt. Ein solcher Spannungsanstieg auf die Spannung der Phase L liegt auch an der Schnittstelle 8 an, die mit der Steuereinheit 10 verbunden ist. In der Figur 1 ist es dargestellt, dass in der Zuführung von der Schnittstelle 8 zu der Steuereinheit 10 eine Anpassschaltung 14 vorgesehen ist, die eine gegebenenfalls erforderliche Anpassung der an der Schnittstelle 8 anliegenden Spannung auf ein für die Steuereinheit 10 verwertbares Niveau bewirkt.

Erfindungsgemäß ist die Steuereinheit 10 nun so ausgelegt, dass sie einen Anstieg einer an der Schnittstelle 8 anliegenden Spannung detektieren kann. Wie bereits beschrieben kann die an der Schnittstelle 8 anliegende Spannung dabei im Wesentlichen nur 2 Werte annehmen, nämlich die Spannung der Phase L des Versorgungsnetzes oder aber 0 V. Da sich die Erkennung der Spannungsanstiegs auf den reinen Anstieg an der Schnittstelle 8 beschränkt, ist es für die Reaktion des Anwesenheitssensors 6 unerheblich, ob durch Schließen des Tasters 3 der Spannungsanstieg verursacht wurde oder aber durch ein weiteres LED Modul 2, wie es nachfolgend noch beschrieben wird. Als Reaktion auf einen solchen erkannten Spannungsanstieg schließt jedenfalls die Steuereinheit 10, genauer deren Mikrocontroller 13, die Schaltvorrichtung 9 und hält ihn zumindest für die Mindestdauer geschlossen.

Die Mindestdauer kann dabei insbesondere einstellbar sein, wozu das LED Modul 2 bzw. der Anwesenheitssensor 6 eine in der Figur nicht dargestellte Schnittstelle zum Abspeichern unterschiedlicher Zeitparameter aufweist.

Nach Verstreichen der Mindestdauer wird dann die Schaltvorrichtung 9 wieder geöffnet, sofern nicht zwischenzeitlich ein Erfassungssignal durch den Präsenzsensor 11 ausgegeben wird. Wird dagegen während der Mindestdauer durch den Präsenzsensor 11 ein Erfassungssignal and den Microcontroller 13 ausgegeben, so bleibt die Schaltvorrichtung 9 in jedem Fall weiterhin geschlossen, solange ein solches Erfassungssignal vorliegt. Im Anschluss daran hält der Anwesenheitssensor 6 die Schaltvorrichtung 9 weiterhin für die Mindestdauer geschlossen. Während des gesamten Zeitraums liegt also an der Schnittstelle 8 ein Steuersignal an, welches durch den Anwesenheitssensor 6 selbst auf Basis der zugeführten Versorgungsspannung erzeugt wird und welches den Spannungspuls über das Loslassen des Tasters 3 hinaus verlängert. Dieses Steuersignal wird über die Verbindungsleitung 15 und die Steuerleitungsschnittstelle 17 auch der Steuerleitung 20 zugeführt und damit auch weiteren angeschlossenen LED-Modulen, Konvertern oder dergleichen.

Zu beachten ist, dass für das Schließen der Schaltvorrichtung 9 und die Operation des Anwesenheitssensors 6 der weitere Verlauf des extern erzeugten Spannungspulses irrelevant ist. Damit kann auch ein kurzer Puls, erzeugt mittels des Tasters 3 das beschriebene Einschalten des Beleuchtungssystems 1 bewirken. Da als Reaktion auf einen solchen Impuls sofort der Anwesenheitssensor 6 seinerseits ein Steuersignal an der Schnittstelle 8 erzeugt, wird letztlich der kurze Impuls des Tasters 3 durch Erzeugen eines Steuersignals durch den Anwesenheitssensor 6 verlängert, sodass an dem Steuereingang 16 der Ansteuerschaltung 5 ein durchgehendes Steuersignal anliegt, welches das Einschalten der LED 4 bewirkt.

In der Figur 1 unterhalb des LED Moduls 2 ist ein Beispiel gezeigt, bei dem separate Komponenten verwendet werden, die aber letztlich die gleiche Funktion erfüllen wie das LED Modul 2. Um eine unnötige Wiederholung zu vermeiden, wird hierbei auf die Ausführungen zum LED Modul 2 verwiesen. Entscheidend ist, dass auch die Schnittstelle 8' des Anwesenheitssensors 6' mit der Steuerleitung 20 verbunden ist. Diese Schnittstelle 8' ist mit einem Steuereingang 16' verbunden, der in diesem Fall an einem eigenständigen Betriebsgerät als Ansteuerschaltung 5' vorgesehen ist.

Wie einleitend schon ausgeführt wurde, kann der Anwesenheitssensor 6 anders konfiguriert sein als der Anwesenheitssensor 6'. Beispielsweise kann der Anwesenheitssensor 6 so konfiguriert sein, dass er die Schaltvorrichtung 9 ausschließlich schließt, wenn zunächst an der Schnittstelle 8 ein Spannungsanstieg erkannt wird. Im Gegensatz dazu könnte der Anwesenheitssensor 6' so konfiguriert sein, dass er auch ohne einen Spannungsanstieg an seiner Schnittstelle 8' die Schaltvorrichtung 9' schließt, wenn sein Präsenzsensor 11' ein Erfassungssignal bei erkennen der Anwesenheit einer Person an seinen Mikrocontroller 13' ausgibt. Die daraufhin geschlossene Schaltvorrichtung 9' bewirkt jedoch, dass auf der Steuerleitung 20 ein Spannungsanstieg entsteht, der wiederum an der Schnittstelle 8 des Anwesenheitssensors 6 des LED Moduls 2 detektiert werden kann. Infolgedessen wird auch hier für die Mindestdauer die Schaltvorrichtung 9 geschlossen. Da über die Steuerleitung 20 außerdem sowohl der Steuereingang 16 als auch der Steuereingang 16' miteinander und mit der Schnittstelle 8 sowie der Schnittstelle 8' verbunden sind, bleiben beide LEDs 4 und 4' solange eingeschaltet, wie wenigstens eine der Schaltvorrichtungen und 9, 9' geschlossen ist.

Es ist leicht erkennbar, dass zusätzlich zu dem in der Figur 1 dargestellten LED Modul 2 und der Anordnung bestehend aus dem Anwesenheitssensor 6', dem Betriebsgerät 5' und der angeschlossenen LED 4' noch weitere solcher Anordnungen oder LED Module vorgesehen sein können.

Darüber hinaus können auch gegenüber dem LED Modul 2 einfacher aufgebautes LED Modul 2" vorgesehen sein, wie es in der Figur 1 unten dargestellt ist. Dieses LED Modul 2" verzichtet auf einen eigenen Anwesenheitssensor. Die Ansteuerschaltung 5 und die LED 4 sind in ihrem Aufbau dem LED Modul 2 bis auf den fehlenden Anwesenheitssensor gleich und sie sind ebenfalls auf einer gemeinsamen Leiterplatte angeordnet. Selbstverständlich ist anstelle der Integration der Ansteuerschaltung 5 und der LED 4 in das LED Modul 2" auch die Anordnung eines separaten Betriebsgeräts und einer daran angeschlossenen LED wie in der Mitte der Figur 1, aber ohne einen zugeordneten Anwesenheitssensor 6', möglich. Der besseren Übersichtlichkeit halber wurde jedoch auf eine separate Darstellung in der Figur 1 verzichtet.

Zu beachten ist auch, dass lediglich zur Vereinfachung jeweils nur eine LED 4, 4' pro Modul/Anordnung dargestellt ist. Es ist jedoch selbsterklärend, dass anstelle einer einzelnen LED auch LED Baugruppen, sei es in paralleler oder serieller Anordnung von LEDs, eingesetzt werden können. Ferner wurde bislang lediglich das Einschalten bzw. das Ausschalten des Lichts genannt. Unter einem solchen Einschalten bzw. Ausschalten ist aber insbesondere auch der Wechsel zwischen einem ersten Dimmlevel und einem zweiten Dimmlevel zu verstehen. So kann insbesondere in eingeschalteten Zustand das Beleuchtungssystem bei z.B. 100 % betrieben werden, wohingegen in ausgeschaltetem Zustand auf einen niedrigeren Dimmlevel, beispielsweise 30 % geschaltet werden kann. Da sämtliche Ansteuerschaltungen direkt mit dem Stromversorgungsnetz verbunden sind, kann auch bei Fehlen eines Steuersignals (0V) an dessen Steuereingang ein solcher zweiter Dimmlevel realisiert werden. Da unterschiedliche Dimmlevel in an sich bekannter Weise in den Betriebsgeräten bzw. den Ansteuerschaltungen abgespeichert sein können, wird auf eine gesonderte Beschreibung zu im Sinne einer knappen Darstellung der Erfindung verzichtet.

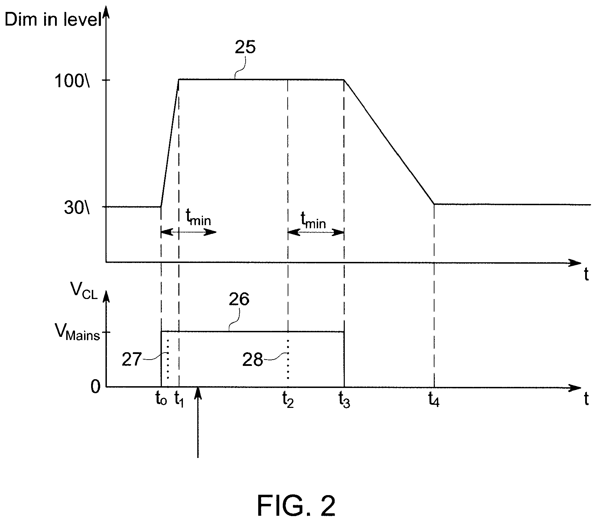

Anhand der Figur 2 soll nun der Betrieb des erfindungsgemäßen Beleuchtungssystems erläutert werden, wobei in dem dargestellten Beispiel das Umschalten zwischen zweiten Dimmlevel, nämlich 30 % in ausgeschalteten Zustand und 100 % in eingeschalteten Zustand, erfolgt. Im oberen Teil der Figur 2 ist die Lichtabgabe als Verlauf 25 des Dimmlevels als Funktion der Zeit angegeben. Der untere Teil der Figur 2 hingegen zeigt den Verlauf 26 des auf der Steuerleitung 20 vorliegenden Steuersignals 26. Im Ausgangszustand des erfindungsgemäßen Beleuchtungssystems 1 ist die Steuerleitung 20 spannungsfrei. Dies ändert sich im Zeitpunkt to, zudem der Taster 3 beispielsweise durch eine Person betätigt wird. Dadurch wird auf der Steuerleitung 20 ein Spannungsanstieg auf die Spannung V_{Mains} bewirkt, die der Spannung der Phase L des Stromversorgungsnetzes entspricht.

Wie es durch die gestrichelte Linie 27 dargestellt ist, würde diese Spannung wieder abfallen, sobald der Taster 3 losgelassen wird. Da aber, wie vorstehend bereits erläutert, durch den Anwesenheitssensor 6 nach dem Erkennen des Spannungsanstiegs an der Schnittstelle 8 die Schaltvorrichtung 9 geschlossen wird, bleibt die Spannung auf der Steuerleitung 20 aufrechterhalten.

In der Figur 2 ist beim Verlauf 25 des Dimmlevels nach dem Zeitpunkt to zu erkennen, dass die Erhöhung auf 100 % entlang einer Rampe erfolgt. Der Verlauf der Rampe kann dabei individuell eingestellt werden. Die Einstellung solcher Rampen beim Einschalten des Lichts ist wiederum an sich bekannt.

Ohne weiteres Ereignis würde die Schaltvorrichtung 9 des Anwesenheitssensors 6 jedenfalls für die Mindestzeitdauer durch die Steuereinheit 10 geschlossen gehalten werden. Im dargestellten, beispielhaften Verlauf wird jedoch angenommen, dass zu dem durch den Pfeil angegebenen Zeitpunkt innerhalb der Mindestdauer eine Person in den Erfassungsbereich des Anwesenheitssensors 6 tritt. Infolgedessen wird durch den Präsenzsensor 11 ein Erfassungssignal erzeugt, weswegen die Steuereinheit 10 Schaltvorrichtung 9 in ihrem geschlossenen Zustand hält. Entsprechend dem Verlauf 25 bleibt also das Licht über die Mindestdauer hinaus eingeschaltet.

Die zunächst erfasste Person verlässt zum Zeitpunkt t₂ den Erfassungsbereich des Anwesenheitssensors 6, sodass dem Mikrocontroller 13 nicht länger ein Erfassungssignal durch den Präsenzsensor 11 zugeführt wird. Dennoch bleibt auch nach dem Wegfall des Erfassungssignals die Schaltvorrichtung 9 für die Mindestdauer, die nun von Neuem zu laufen beginnt, geschlossen. Erst nach Ablauf dieser neuerlichen Mindestdauer (Zeitpunkt t₃) wird die Schaltvorrichtung 9 geöffnet und die Spannung auf der Steuerleitung 20 fällt auf 0 V. Infolgedessen, entlang einer wiederum vorzugsweise einstellbaren Rampe, wird das Licht ausgeschaltet bzw. im dargestellten Ausführungsbeispiel von 100 % Dimmlevel auf 30 % Dimmlevel heruntergedimmt. Zum Zeitpunkt t₄ ist der Vorgang abgeschlossen und das Beleuchtungssystem wieder im Ruhezustand.

Ist der Anwesenheitssensor 6' ebenfalls konfiguriert, bei Erkennen eines Spannungsanstiegs ein Steuersignal auszugeben, schalten beide Schaltvorrichtungen 9, 9' leitend und öffnen die jeweilige Schaltvorrichtung 9, 9' unabhängig voneinander, je nach Auftreten von Erkennungsereignissen in ihren Erfassungsbereichen bzw. den eingestellten Mindestdauern.

Es ist zu beachten, dass für alle in dem Beleuchtungssystem 1 betriebenene LEDs oder LED Baugruppen der Module oder Anordnungen auch unterschiedliche Dimmlevel für eingeschalteten Zustand und für den ausgeschalteten Zustand eingestellt werden können. Diese Einstellung wird durch entsprechende Konfiguration der zugeordneten Ansteuerschaltung erreicht. Lediglich die Zeiten, zu denen eingeschaltet wird und ausgeschaltet wird, sind zwangsläufig durch das gemeinsame Beaufschlagen der Steuerleitung 20 mit einer Spannung durch egal welche Anwesenheitssensor festgelegt. Das Beleuchtungssystem bleibt solange eingeschaltet, wie durch irgendeinen der vorhandenen und mit der Steuerleitung 20 verbundenen Anwesenheitssensoren 6, 6' ein Steuersignal an dessen Schnittstelle 8, 8' ausgegeben wird. Dabei können in unterschiedlichen Anwesenheitssensoren sogar unterschiedliche Mindestdauern festgelegt werden.

Die Steuereinheit 10, 10' kann weiterhin mit einem Helligkeitssensor verbunden sein. Die Ausgabe der Versorgungsspannung V_{Mains} über die Schnittstelle 8 kann abhängig von dem Helligkeitssensor erfolgen. Beispielsweise kann mit dem Helligkeitssensor die Umgebungshelligkeit überwacht werden. Wenn beispielsweise eine vorgegebenen Mindest-Umgebungshelligkeit überschritten wird, kann die Helligkeit der LEDs 4 und 4' als Leuchtmittel verringert werden. Dabei kann beispielsweise die Ansteuerschaltung 5 die Helligkeit der LED 4 verringern und / oder die Versorgungsspannung V_{Mains} über die Schnittstelle 8, 8' kodiert ausgeben, beispielsweise mittels eines Schaltmusters. Es kann aber beispielsweise auch die Ausgabe der Versorgungsspannung V_{Mains} über die Schnittstelle 8, 8' bei Überschreiten einer vorgegebenen Mindest- Umgebungshelligkeit unterbunden werden.

Es wird gemäß der Erfindung auch ein Verfahren zur Ausgabe einer Versorgungsspannung VMains an einer Schnittstelle 8, 8' eines Anwesenheitssensors ermöglicht, wobei dem Anwesenheitssensor 6, 6' über eine Versorgungsspannungsschnittstelle 7, 7' elektrische Energie zuführbar ist und der Anwesenheitssensor 6, 6' die Versorgungsspannungsschnittstelle 7, 7' mit der Schnittstelle 8, 8' zur Ausgabe der Versorgungsspannung verbindet, wenn auf Basis eines Erfassungssignals eine Anwesenheit einer Person erkennt wird. Ein Anstieg einer an der Schnittstelle 8, 8' anliegenden Spannung auf die Versorgungsspannung kann erkannt werden. Bei einem erkannten Anstieg kann die Versorgungspannungsschnittstelle 7, 7' mit der Schnittstelle 8, 8' für eine Mindestzeitdauer t_{Min} verbunden werden.

## Patentansprüche

1. Anwesenheitssensor,
der eine Schnittstelle (8, 8'), eine Versorgungsspannungsschnittstelle (7, 7'), eine Steuereinheit (10, 10') und eine Schaltvorrichtung (9, 9') aufweist,
wobei über die Schnittstelle (8, 8') eine Versorgungsspannung (V_{Mains}) ausgebbar ist,
wobei dem Anwesenheitssensor (6, 6') über die Versorgungsspannungsschnittstelle (7, 7') elektrische Energie zuführbar ist, und
wobei die mit der Steuereinheit (10, 10') verbundene Schaltvorrichtung (9, 9') ausgelegt ist, die Versorgungsspannungsschnittstelle (7, 7') mit der Schnittstelle (8, 8') zur Ausgabe der Versorgungsspannung zu verbinden, wenn die Steuereinheit (10, 10') auf Basis eines Erfassungssignals eine Anwesenheit einer Person erkennt,
**dadurch gekennzeichnet,**
**dass** die Steuereinheit (10, 10') mit der Schnittstelle (8, 8') verbunden ist und so eingerichtet ist, dass sie einen Anstieg einer an der Schnittstelle (8, 8') anliegenden Spannung auf die Versorgungsspannung erkennt und die Schaltvorrichtung (9, 9') bei einem erkannten Anstieg zum Verbinden der Versorgungspannungsschnittstelle (7, 7') mit der Schnittstelle (8, 8') für eine Mindestzeitdauer (t_{Min}) schließt.

2. Anwesenheitssensor nach Anspruch 1,
**dadurch gekennzeichnet,**
**dass** die Steuereinrichtung (10, 10') so eingerichtet ist, dass sie bei Vorliegen des Erfassungssignals, das die Anwesenheit einer Person angibt, die Schaltvorrichtung (9, 9') geschlossen hält, wobei die Schaltvorrichtung (9, 9') noch für die Mindestdauer (t_{Min}) geschlossen bleibt, wenn kein Erfassungssignal mehr vorliegt.

3. Anwesenheitssensor nach Anspruch 1,
**dadurch gekennzeichnet,**
**dass** die Steuervorrichtung (10, 10') so eingerichtet ist, dass sie bei Vorliegen des Erfassungssignals, das die Anwesenheit einer Person angibt, die Schaltvorrichtung (9, 9') automatisch schließt.

4. Beleuchtungssystem mit einem Anwesenheitssensor (6, 6') nach einem der Ansprüche 1 bis 3,
wobei die Schnittstelle (8, 8') des Anwesenheitssensors (6, 6') mit einem Steuereingang (16, 16') einer Ansteuerschaltung (5, 5') verbunden ist, die bei Anliegen der Versorgungsspannung (V_{Mains}) an dem Steuereingang (16, 16') ein ausgangsseitig mit der Ansteuerschaltung (5, 5') verbundenes Leuchtmittel (4, 4') mit elektrischer Energie versorgt.

5. Beleuchtungssystem nach Anspruch 4,
**dadurch gekennzeichnet,**
**dass** der Anwesenheitssensor (6), das Leuchtmittel (4) und die Ansteuerschaltung (5) auf einer gemeinsamen Leiterplatte ausgebildet sind.

6. Beleuchtungssystem nach Anspruch 4 oder 5,
**dadurch gekennzeichnet,**
**dass** die Schnittstelle (8, 8') mit einer Steuerleitung (20) verbunden ist, die über einen Taster (3) mit einer Versorgungsspannung beaufschlagbar ist.

7. Beleuchtungssystem nach einem der Ansprüche 4 bis 6,
**dadurch gekennzeichnet,**
**dass** mit der Schnittstelle (8, 8') ein Steuereingang (16, 16') wenigstens einer weiteren Ansteuerschaltung (5, 5') zum Betreiben zumindest eines weiteren Leuchtmittels (4, 4') verbunden ist.

8. Beleuchtungssystem nach Anspruch 7,
**dadurch gekennzeichnet,**
**dass** wenigstens einer weiteren Ansteuerschaltung (5, 5') ebenfalls ein Anwesenheitssensor (6, 6') nach einem der Ansprüche 1 bis 3 zugeordnet ist, dessen Schnittstelle (8, 8') mit dem Steuereingang (16, 16') dieser Ansteuerschaltung verbunden ist.

9. Beleuchtungssystem nach einem der Ansprüche 4 bis 6,
**dadurch gekennzeichnet,**
**dass** die Steuereinheit (10, 10') weiterhin mit einem Helligkeitssensor verbunden ist, und die Ausgabe der Versorgungsspannung (V_{Mains}) über die Schnittstelle (8, 8') abhängig von dem Helligkeitssensor erfolgt.

10. Verfahren zur Ausgabe einer Versorgungsspannung (VMains) an einer Schnittstelle (8, 8') eines Anwesenheitssensors, wobei der Anwesenheitssensor eine mit der Schnittstelle verbundene Steuereinheit und eine mit der Steuereinheit verbundene Schaltvorrichtung aufweist, und
wobei dem Anwesenheitssensor (6, 6') über eine Versorgungsspannungsschnittstelle (7, 7') elektrische Energie zuführbar ist und der Anwesenheitssensor (6, 6') mittels der Schaltvorrichtung die Versorgungsspannungsschnittstelle (7, 7') mit der Schnittstelle (8, 8') zur Ausgabe der Versorgungsspannung verbindet, wenn auf Basis eines Erfassungssignals eine Anwesenheit einer Person von der Steuereinheit erkannt wird,
**dadurch gekennzeichnet,**
**dass** ein Anstieg einer an der Schnittstelle (8, 8') anliegenden Spannung auf die Versorgungsspannung von der Steuereinheit erkannt wird und bei einem erkannten Anstieg die Versorgungspannungsschnittstelle (7, 7') mit der Schnittstelle (8, 8') für eine Mindestzeitdauer (t_{Min}) durch Schließung der Schaltvorriehtung verbunden wird.

## Claims

1. Presence sensor,
which comprises an interface (8, 8'), a supply voltage interface (7, 7'), a control unit (10, 10') and a switching device (9, 9'),
wherein a supply voltage (V_{Mains}) can be output via the interface (8, 8'),
wherein electrical energy can be supplied to the presence sensor (6, 6') via the supply voltage interface (7, 7'), and
wherein the switching device (9, 9') connected to the control unit (10, 10') is designed to connect the supply voltage interface (7, 7') to the interface (8, 8') in order to output the supply voltage when the control unit (10, 10') detects a presence of a person on the basis of a detection signal,
**characterized in that**
the control unit (10, 10') is connected to the interface (8, 8') and is configured such that it detects an increase in a voltage applied to the interface (8, 8') to the supply voltage and, when an increase is detected, closes the switching device (9, 9') in order to connect the supply voltage interface (7, 7') to the interface (8, 8') for a minimum duration (t_{Min}).

2. Presence sensor according to Claim 1,
**characterized in that**
the control device (10, 10') is configured such that it keeps the switching device (9, 9') closed when the detection signal indicating the presence of a person is present, wherein the switching device (9, 9') still remains closed for the minimum duration (t_{Min}) even if a detection signal is no longer present.

3. Presence sensor according to Claim 1,
**characterized in that**
the control device (10, 10') is configured to close the switching device (9, 9') automatically when the detection signal indicating the presence of a person is present.

4. Lighting system with a presence sensor (6, 6') according to any one of Claims 1 to 3,
wherein the interface (8, 8') of the presence sensor (6, 6') is connected to a control input (16, 16') of a control circuit (5, 5') which, when the supply voltage (V_{Mains}) is applied at the control input (16, 16'), supplies electrical energy to an illuminant (4, 4') connected on the output side to the control circuit (5, 5').

5. Lighting system according to Claim 4,
**characterized in that**
the presence sensor (6), the illuminant (4), and the control circuit (5) are formed on a common circuit board.

6. Lighting system according to Claims 4 or 5,
**characterized in that**
the interface (8, 8') is connected to a control line (20) to which a supply voltage can be applied via a button (3).

7. Lighting system according to any one of Claims 4 to 6,
**characterized in that**
a control input (16, 16') of at least one further control circuit (5, 5') for operating at least one further illuminant (4, 4') is connected to the interface (8, 8').

8. Lighting system according to Claim 7,
**characterized in that**
at least one further control circuit (5, 5') is also assigned a presence sensor (6, 6') according to any one of Claims 1 to 3, the interface (8, 8') of which is connected to the control input (16, 16') of this control circuit.

9. Lighting system according to any one of Claims 4 to 6,
**characterized in that**
the control unit (10, 10') is further connected to a brightness sensor, and the supply voltage (V_{Mains}) is output via the interface (8, 8') dependent on the brightness sensor.

10. Method for outputting a supply voltage (VMains) at an interface (8, 8') of a presence sensor, wherein the presence sensor has a control unit connected to the interface and a switching device connected to the control unit, and
wherein electrical energy can be supplied to the presence sensor (6, 6') via a supply voltage interface (7, 7') and the presence sensor (6, 6') connects the supply voltage interface (7, 7') to the interface (8, 8') by means of the switching device in order to output the supply voltage when a presence of a person is detected by the control unit on the basis of a detection signal,
**characterized in that**
an increase in a voltage present at the interface (8, 8') to the supply voltage is detected by the control unit and, when an increase is detected, the supply voltage interface (7, 7') is connected to the interface (8, 8') for a minimum period (t_{Min}) by closure of the switching device.

## Revendications

1. Capteur de présence,
lequel présente une interface (8, 8'), une interface de tension d'alimentation (7, 7'), une unité de commande (10, 10') et un dispositif de commutation (9, 9'),
une tension d'alimentation (V_{Mains}) pouvant être sortie à travers l'interface (8, 8'),
de l'énergie électrique pouvant être alimentée au capteur de présence (6, 6') à travers l'interface de tension d'alimentation (7, 7') et
le dispositif de commutation (9, 9') connecté à l'unité de commande (10, 10') étant conçu pour connecter l'interface de tension d'alimentation (7, 7') à l'interface (8, 8') pour la sortie de la tension d'alimentation, lorsque l'unité de commande (10, 10') reconnait la présence d'une personne sur la base d'un signal de détection,
**caractérisé**
**en ce que** l'unité de commande (10, 10') est connectée à l'interface (8, 8') et est configurée de telle façon qu'elle reconnait une augmentation d'une tension appliquée à l'interface (8, 8') à la tension d'alimentation et, lors d'une augmentation reconnue, le dispositif de commutation (9, 9') se ferme pour une durée minimale (t_{Min}) pour la connexion de l'interface de tension d'alimentation (7, 7') à l'interface (8, 8').

2. Capteur de présence selon la revendication 1,
**caractérisé**
**en ce que** l'unité de commande (10, 10') est configurée de telle façon que lors de la présence du signal de détection, qui indique la présence d'une personne, elle maintient le dispositif de commutation (9, 9') fermé, le dispositif de commutation (9, 9') restant encore fermé pour la durée minimale (t_{Min}), lorsque plus aucun signal de détection n'est présent.

3. Capteur de présence selon la revendication 1,
**caractérisé**
**en ce que** l'unité de commande (10, 10') est configurée de telle façon que lors de la présence du signal de détection qui indique la présence d'une personne, elle ferme automatiquement le dispositif de commutation (9, 9').

4. Système d'éclairage comprenant un capteur de présence (6, 6') selon l'une quelconque des revendications 1 à 3,
l'interface (8, 8') du capteur de présence (6, 6') étant connectée à une entrée de commande (16, 16') d'un circuit de commande (5, 5'), qui, lors de l'application de la tension d'alimentation (V_{Mains}) à l'entrée de commande (16, 16'), alimente un moyen d'éclairage (4, 4') connecté côté sortie au circuit de commande (5, 5') en énergie électrique.

5. Système d'éclairage selon la revendication 4,
**caractérisé**
**en ce que** le capteur de présence (6), le moyen d'éclairage (4) et le circuit de commande (5) sont formés sur une carte de circuit imprimé commune.

6. Système d'éclairage selon la revendication 4 ou 5,
**caractérisé**
**en ce que** l'interface (8, 8') est connectée à un câble de commande (20), auquel une tension d'alimentation peut être appliquée au moyen d'un bouton-poussoir (3).

7. Système d'éclairage selon l'une quelconque des revendications 4 à 6,
**caractérisé**
**en ce qu'**une entrée de commande (16, 16') d'au moins un autre circuit de commande (5, 5') est connectée à l'interface (8, 8') pour faire fonctionner au moins un autre moyen d'éclairage (4, 4').

8. Système d'éclairage selon la revendication 7,
**caractérisé**
**en ce qu**'un capteur de présence (6, 6') selon l'une quelconque des revendications 1 à 3 est également associé à au moins un autre circuit de commande (5, 5'), dont l'interface (8, 8') est connectée à l'entrée de commande (16, 16') dudit circuit de commande.

9. Système d'éclairage selon l'une quelconque des revendications 4 à 6,
**caractérisé**
**en ce que** l'unité de commande (10, 10') est en outre connectée à un capteur de luminosité et que la sortie de la tension d'alimentation (V_{Mains}) à travers l'interface (8, 8') s'effectue en fonction du capteur de luminosité.

10. Procédé pour la sortie d'une tension d'alimentation (VMains) à une interface (8, 8') d'un capteur de présence, le capteur de présence présentant une unité de commande connectée à l'interface et un dispositif de commutation connecté à l'unité de commande et
de l'énergie électrique pouvant être alimentée au capteur de présence (6, 6') à travers une interface de tension d'alimentation (7, 7') et le capteur de présence (6, 6') connectant au moyen du dispositif de commutation l'interface de tension d'alimentation (7, 7') à l'interface (8, 8') pour la sortie de la tension d'alimentation, lorsque la présence d'une personne est reconnue par l'unité de commande sur la base d'un signal de détection,
**caractérisé**
**en ce qu**'une augmentation de la tension appliquée à l'interface (8, 8') à la tension d'alimentation est reconnue par l'unité de commande et que lors de l'augmentation reconnue l'interface de tension d'alimentation (7, 7') est connectée à l'interface (8, 8') pour une durée minimale (t_{Min}) par la fermeture du dispositif de commutation.
